# EUROPEAN PATENT APPLICATION

(11) **EP 2 136 521 A1**
(43) Date of publication of application: **23.12.2009**
(21) Application number: 08104492.7
(22) Date of filing: 20.06.2008
(51) Int. Cl.: H04L 27/26

(54) **Method, device and system using interference rejection combining in OFDMA**

(71) Applicant: Nokia Siemens Networks Oy, 02610 Espoo (FI)
(72) Inventor: Piirainen, Olli, 90100, Oulu (FI); Sipilä, Kari, 01690, Vantaa (FI)
(74) Representative: Bruglachner, Thomas E.

(57) **Abstract**

A method and a device for data processing are suggested, said method providing an interference rejection combining zone comprising at least two slots. Furthermore, a communication system comprising such a device is provided.

## Description

The invention relates to a method and to a device for data processing and to a communication system comprising such a device.

WiMAX, the Worldwide Interoperability for Microwave Access, is a telecommunications technology aimed at providing wireless data over long distances in a variety of ways, from point-to-point links to full mobile cellular type access.

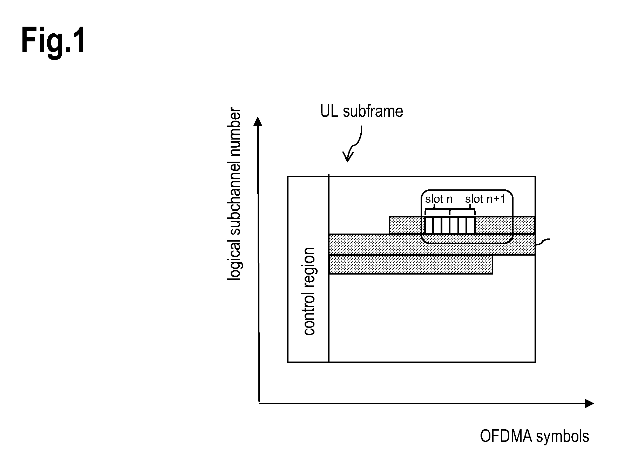

**Fig.1** shows an UL subframe comprising a control region and UL bursts. WiMAX organizes transmitted data into such bursts. Each burst comprises one or more slots (see slots n and n+1 in Fig.1). One slot is preferably considered the smallest allocation unit for data transmission.

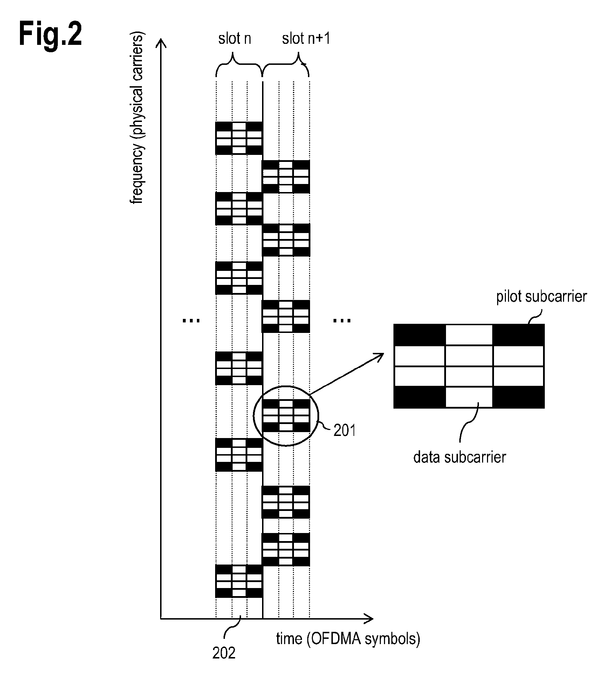

In **Fig.2** said slots n and n+1 are visualized in a two-dimensional space for UL PUSC subcarrier permutation, wherein an x-axis depicts a time (i.e., OFDMA symbols) and a y-axis depicts a frequency (i.e., physical carriers). In case of UL PUSC one slot comprises one subchannel spanning over 3 OFDMA symbols (a time interval for an OFDMA symbol is depicted by reference 202), said slots being further separated into six tiles 201 which are distributed in frequency. A tile 201 comprises four pilot subcarriers and eight data subcarriers, wherein the pilot subcarriers are used for channel estimation purposes. In case the UL burst contains several slots on one subchannel but adjacent in time, the tiles of consequent slots change their frequency location due to subchannel rotation.

Disadvantageously, the number of pilots in every tile is limited and the quality of the channel estimate and noise plus interference matrix estimate are rather poor. This significantly limits a receiver's performance.

The **problem** to be solved is to overcome the disadvantages set forth above and in particular to provide a more efficient channel estimation.

This problem is solved according to the features of the independent claims. Further embodiments result from the depending claims.

In order to overcome this problem, a method for data processing is suggested, said method providing an interference rejection combining zone comprising at least two slots.

It is noted that "slot" may refer to an allocation unit, in particular to a smallest allocation unit.

Slot may further be an allocation unit in a time domain and/or in a frequency domain.

This approach efficiently allows for an efficient receiving diversity with interference rejection combining (IRC). In general, IRC may be based on a noise whitening operation applied on the received signals deteriorated by colored interference. Said IRC zone can also be understood as any zone that allows for an improved channel estimation and/or for noise and/or interference (covariance) estimation.

It is an embodiment that said at least two slots are combined by performing an estimation of receiver parameters and/or of a channel impulse response and/or of a noise and/or interference covariance matrix.

According to a further embodiment, said estimation is performed by utilizing pilots from combined pilot information based on said at least two slots and/or based on at least two tiles.

In an embodiment, a burst on the interference rejection combining zone extends over at least two slots.

In another embodiment, the burst is an UL burst of a UL subframe.

In a further embodiment, said interference rejection combining zone comprises at least two tiles extending over at least two slots.

According to an embodiment, said interference rejection combining zone comprises an even number of slots.

According to an embodiment, said combining and/or estimation on the said interference rejection combining zone is processed in groups of two slots/tiles.

Hence, a granularity of user slots on the interference rejection combining zone can be set to two.

For example, on an interference rejection combining zone of 140 slots a 1^{st} burst may comprise 2 slots, a 2^{nd} burst may comprise 60 slots and a 3^{rd} burst may comprise 78 slots. In this particular example each burst on the interference rejection combining comprised an even number of slots.
However different numbers and/or combinations of slots may be applicable as well.

It is also an embodiment that the at least two subsequent slots and/or tiles are located in the same frequency range. In particular, subcarriers of the at least two slots may be located on the same frequencies.

The at least two subsequent slots and/or tiles may in particular utilize the same subcarriers.

In a next embodiment, said slot is an allocation unit in particular comprising one subchannel spanning over three OFDMA symbols.

It is also an embodiment that a subchannel rotation is switched off.

Pursuant to another embodiment, the at least two slots are associated with one subscriber and/or user.

It is also an embodiment that a burst associated with one subscriber and/or user comprises an even number of slots.

According to an embodiment, said interference rejection combining zone is implemented in a WiMAX environment.

According to another embodiment, said interference rejection combining zone comprises pilot information and data information, in particular pilot subcarriers and data subcarriers.

In yet another embodiment, the pilot information is used for channel estimation purposes.

According to a next embodiment, said method is utilized in a receiver of a WiMAX network.

The problem stated above is also solved by a device comprising a and/or being associated with a processor unit and/or a hard-wired circuit and/or a logic device that is arranged such that the method as described herein is executable thereon.

According to an embodiment, the device is a communication device, in particular a or being associated with a base station, a receiver or a base transceiver station. Said base station and/or base transceiver station in particular comprises a WiMAX functionality.

The problem stated supra is further solved by a communication system comprising the device as described herein.

Embodiments of the invention are shown and illustrated in the following figure:

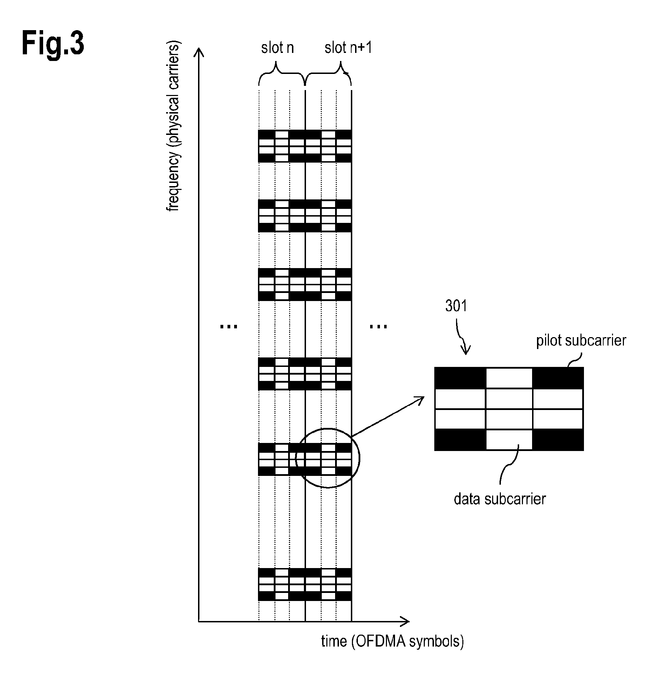

- Fig.3: shows a distribution of several aligned tiles over two slots adjacent in time of a uplink burst according to a WiMAX approach.

Data transmission for WiMAX 802.16e is organized in bursts, each one carrying multiple slots. In UL PUSC each slot comprises six tiles distributed in frequency (i.e. 6X4 subcarriers) and 3 consecutive OFDM symbols. In AMC, 2X3 transmission a slot comprises 18 subcarriers and 3 consecutive OFDM symbols utilizing adjacent frequencies.

To improve a reception quality, the receiving BS may provide Rx diversity with interference rejection combining (IRC). In general, IRC is based on noise whitening operation applied on the received signals deteriorated by colored interference.

The performance of the IRC may depend on a channel estimation efficiency. Hence, an actual number of pilots for the estimation to be considered may not suffice and hence may lead to a deteriorated accuracy of channel estimation. Hence, highly frequency-dispersive environments could lead to poor results in terms of block error rates (BLER).

The approach introduces an IRC zone, in particular among UL-PUSC or AMC zones.

The IRC zone may comprise the slot structure of UL-PUSC, but subchannel rotation is switched-off. The IRC zone provides frequency alignment of tiles within the same burst resulting to more pilots for channel estimation purposes as well as for noise and/or interference covariance estimation purposes. Said alignment in particular refers to at least two tiles being aligned over at least two slots adjacent in time, wherein the at least two tiles each occupies the same frequency range and/or physical carriers.

In AMC, a burst allocation for one user is continuous in time and frequency. The IRC zone ensures that there are always at least two slots, adjacent in time, utilized for channel estimation purposes as well as for noise and/or interference covariance estimation purposes.

**Fig.3** shows two PUSC slots n and n+1 comprising 3 OFDMA symbols each. Each slot comprises 6 tiles 301 that are distributed over a frequency. The tiles are aligned over both slots n and n+1. Each tile 301 comprises 4 pilot subcarriers and 8 data subcarriers, wherein - due to the alignment - 8 pilot subcarriers can be utilized for channel estimation and/or for noise and/or interference estimation purposes.

Accordingly, significant improvement in the BLER performance could be achieved.

The proposed "IRC zone" may show the following characteristics:
i) Subchannel rotation is switched off.
ii) Each user's allocation within a particular IRC zone has an even number of slots.
iii) The length of the IRC zone has an even number of slots.

It is noted that the IRC zone can be used with existing WiMAX compatible equipment.

One advantage of the above defined IRC zone is that there are at least two subsequent tiles in the same frequency locations. Thus, more pilots can be utilized for channel estimation purposes.

A granularity of user slots can be set to two. Hence, the same interferers are also present on the same given tiles if the same structure is used in co-channel cells. Thus, it is possible to obtain more reliable noise plus interference covariance estimate for IRC purposes.

It is noted that the approach provided may apply for PUSC as well as for AMC subcarrier allocation. In particular regarding PUSC, tiles may be utilized.

Regarding AMC, there may be an even number of slots and at least two slots per user allocation. However, there is no need turning off subchannel rotation as there is no such subchannel rotation in AMC. The subcarriers are the same for adjacent slots in AMC and the granularity of 2 can be utilized for performing the estimations over two adjacent slots.

Regarding the adjacency of the slots, it may be advantageous for IRC utilizing the adjacency (in time) of (at least) two slots. For each slot of a burst in the IRC zone there may be another slot of the same burst which is adjacent in time (either a predecessor or a successor) using subcarriers on the same frequencies. This may apply to PUSC IRC zone with rotation off as well as to AMC IRC zone as such.

It may also be an option to use adjacency in frequency if the slots are at the same time.

### Abbreviations:

| | |
|---|---|
| AMC | Adaptive Modulation and Coding |
| BLER | Block Error Rate |
| BTS | Base Transceiver Station |
| FCH | Frame Control Header |
| FUSC | Full Usage of Subchannels |
| IRC | Interference Rejection Combining |
| MAC | Media Access Control |
| MCS | Modulation and Coding Scheme |
| MIMO | Multiple Input Multiple Output |
| MS | Mobile Station |
| OFDMA | Orthogonal Frequency Division Multiple Access |
| PUSC | Partial Usage of Subchannels |
| UL | Uplink |
| WiMAX | Worldwide Interoperability for Microwave Access |

## Claims

1. A method for data processing by providing an interference rejection combining zone comprising at least two slots.

2. The method according to claim 1, wherein said slot is or is associated with an allocation unit in a time domain and/or in a frequency domain.

3. The method according to any of the preceding claims, wherein a combining and/or estimation on said interference rejection combining zone is processed in groups of two slots and/or tiles.

4. The method according to any of the preceding claims, wherein said at least two slots are combined by performing an estimation of receiver parameters and/or of a channel impulse response and/or of a noise and/or interference covariance matrix.

5. The method according to claim 4, wherein said estimation is performed by utilizing pilots from combined pilot information based on said at least two slots.

6. The method according to claim 5, wherein said estimation is performed by utilizing pilots from combined pilot information based on at least two slots and/or based on at least two tiles.

7. The method according to any of the preceding claims, wherein a burst of the interference rejection combining zone extends over at least two slots.

8. The method according to any of the preceding claims, wherein the interference rejection combining zone extends over at least two slots of a burst.

9. The method according claim 8, wherein the burst is an UL burst of a UL subframe.

10. The method according to any of the preceding claims, wherein said interference rejection combining zone comprises at least two tiles extending over at least two slots.

11. The method according to any of the preceding claims, wherein said interference rejection combining zone comprises an even number of slots.

12. The method according to any of the preceding claims, wherein subcarriers of the at least two slots are located on the same frequencies.

13. The method according to any of the preceding claims, wherein said slot is an allocation unit in particular comprising one subchannel spanning over three OFDMA symbols.

14. The method according to any of the preceding claims,
wherein a subchannel rotation is switched off.

15. The method according to any of the preceding claims, wherein the at least two slots are associated with one subscriber and/or user.

16. The method according to claim 15, wherein a burst associated with one subscriber and/or user comprises an even number of slots.

17. The method according to any of the preceding claims, wherein said interference rejection combining zone is implemented in a WiMAX environment.

18. The method according to any of the preceding claims, wherein said interference rejection combining zone comprises pilot information and data information, in particular pilot subcarriers and data subcarriers.

19. The method according to claim 18, wherein the pilot information is used for channel estimation purposes.

20. The method according to any of the preceding claims utilized in a receiver of a WiMAX network.

21. A device comprising a and/or being associated with a processor unit and/or a hard-wired circuit and/or a logic device that is arranged such that the method according to any of the preceding claims is executable thereon.

22. The device according to claim 21, wherein said device is a communication device, in particular a or being associated with a base station, a receiver or a base transceiver station.

23. Communication system comprising the device according to any of claims 21 or 22.
